# EUROPÄISCHE PATENTSCHRIFT

(11) **EP 3 231 642 B1**
(45) Veröffentlichungstag und Bekanntmachung des Hinweises auf die Patenterteilung: **05.08.2020**
(21) Anmeldenummer: 17165529.3
(22) Anmeldetag: 07.04.2017
(51) Int. Cl.: B60D 1/24, B60D 1/62

(54) **ANORDNUNG ZUR ERMITTLUNG DER STECKPOSITION EINES SCHLAUCHKUPPLERS AN EINEM ANSCHLUSSFELD**
ARRANGEMENT FOR THE DETERMINATION OF THE PLUG POSITION OF A HOSE COUPLER TO A CONNECTION FIELD
AGENCEMENT DE DÉTERMINATION DE LA POSITION D'ENFICHAGE D'UN COUPLEUR TUBULAIRE SUR UN PANNEAU DE CONNEXION

(30) Priorität: 15.04.2016 DE 102016206401
(43) Veröffentlichungstag der Anmeldung: 18.10.2017
(73) Patentinhaber: Deere & Company, Moline, IL 61265 (US)
(72) Erfinder: Baum, Bernd, 68163 Mannheim (DE); Reinmut, Florian, 68163 Mannheim (DE); Frost, Daniel, 68163 Mannheim (DE)
(74) Vertreter: Dehnhardt, Florian Christopher

(56) Entgegenhaltungen:
- EP-A1- 2 018 981
- EP-A1- 2 116 400
- CA-A1- 2 241 523
- US-A- 5 604 681

## Beschreibung

Die Erfindung betrifft ein landwirtschaftliches Fahrzeuggespann mit einer Anordnung zur Ermittlung der Steckposition eines Schlauchkupplers an einem Anschlussfeld.

Eine derartige Anordnung für eine an einem Traktor anbringbare Landmaschine geht beispielsweise aus der EP 2 018 981 A1 hervor. Die Anordnung umfasst mehrere Hydraulikschläuche, über die sich hydraulische Arbeitsfunktionen der Landmaschine steuern lassen, wobei an jedem der Hydraulikschläuche ein individueller RFID-Transponder angebracht ist. Die RFID-Transponder befinden sich in der Nähe zugehöriger Anschlussenden der Hydraulikschläuche, sodass an traktorseitigen Gegenanschlüssen angebrachte RFID-Reader den jeweiligen RFID-Transponder beim Einstecken der Anschlussenden auslesen können. Auf diese Weise lässt sich eine Zuordnung der Hydraulikleitungen bzw. der über diese steuerbaren Arbeitsfunktionen zu den jeweiligen Gegenanschlüssen herstellen, was es einer zugehörigen Steuerelektronik erlaubt, eine entsprechende Funktionsbelegung der Gegenanschlüsse vorzunehmen. Da dies zugleich die Übermittlung einer individuellen Kupplerkennung erfordert, gestaltet sich die Datenübertragung zwischen RFID-Transponder und RFID-Reader vergleichsweise aufwendig. Das Dokument EP 2 116 400 A1 offenbart ein landwirtschaftliches Fahrzeuggespann gemäß dem Oberbegriff des Anspruchs 1.

Es ist daher Aufgabe der vorliegenden Erfindung, eine bezüglich ihrer Datenübertragung vereinfachte Anordnung der eingangs genannten Art anzugeben.

Diese Aufgabe wird durch ein landwirtschaftliches Fahrzeuggespann mit einer Anordnung zur Ermittlung der Steckposition eines Schlauchkupplers an einem Anschlussfeld mit den Merkmalen des Patentanspruchs 1 gelöst.

Die Anordnung umfasst ein Anschlussfeld mit einer Vielzahl von Kupplungsdosen zum Anschluss zugehöriger Schlauchkuppler, wenigstens einen daran anschließbaren Schlauchkuppler, eine Datenschnittstelle sowie eine Auswerteeinheit. Ferner weist der wenigstens eine Schlauchkuppler eine Empfangsspule sowie jede der Kupplungsdosen eine Sendespule auf, wobei beim Anschließen des wenigstens einen Schlauchkupplers an eine der Kupplungsdosen ein an der Sendespule abrufbarer individueller Identifikator mittels der Empfangsspule ausgelesen und über die mit der Empfangsspule kommunizierende Datenschnittstelle an die Auswerteeinheit zur Ermittlung der Steckposition des wenigstens einen Schlauchkupplers übertragen wird.

Bei den übertragenen Identifikationsdaten kann es sich um den Identifikator selbst oder eine daraus abgeleitete Größe handeln, die den Identifikator in eindeutiger Weise charakterisiert. Da der Identifikator ausgehend von der Anschlussdose in Richtung des wenigstens einen Schlauchkupplers übertragen wird, erübrigt sich die gleichzeitige Übermittlung einer individuellen Kupplerkennung, wie sie die aus dem Stand der Technik bekannte Anordnung erforderlich macht. Dies führt zu einer wesentlichen Vereinfachung der Datenübertragung zwischen Sende- und Empfangsspule.

Jeder der Kupplungsdosen ist ein individueller Identifikator zugewiesen, der sich von denjenigen der übrigen Kupplungsdosen des Anschlussfelds in eindeutiger Weise unterscheidet, sodass eine verlässliche Erkennung der jeweiligen Steckposition des wenigstens einen Schlauchkupplers an dem Anschlussfeld sichergestellt ist.

Bei den Schlauchkupplern handelt es sich typischerweise um hydraulische und/oder pneumatische Energieversorgungsanschlüsse, wie sie im Nutzfahrzeugbereich allgemein Verwendung finden. Die Kupplungsdosen sind dementsprechend als Hydraulik- und/oder Pneumatikbuchsen zur Aufnahme der Schlauchkuppler ausgebildet.

Vorteilhafte Weiterbildungen der erfindungsgemäßen Anordnung gehen aus den Unteransprüchen hervor.

Vorzugsweise handelt es sich bei dem Identifikator um ein mittels der Sendespule in der Empfangsspule induziertes Stromsignal mit einer für die Kupplungsdosen jeweils spezifischen Frequenz und/oder Amplitude. Hierbei kann jede der Sendespulen mit einer eigenen Generatoreinheit zur Erzeugung eines entsprechenden Stromsignals in Verbindung stehen. Denkbar ist jedoch auch, dass sämtliche Sendespulen mit einem von einem einzelnen Signalsynthesizer erzeugten einheitlichen Frequenzgemisch in Form eines Rauschsignals beaufschlagt werden, wobei die Erzeugung der spulenindividuellen Stromsignale mittels mit den Sendespulen sowie weiteren Filterelementen gebildeten Resonanzkreisen erfolgt. Abgesehen von der Verwendung analoger Stromsignale kann es sich auch um digitale Stromsignale zur Bereitstellung eines den Identifikator repräsentierenden Binärcodes handeln.

Gemäß einer ersten Ausführungsform der erfindungsgemäßen Anordnung besteht die Möglichkeit, dass die Auswerteeinheit der Kupplungsdose nach Maßgabe der ermittelten Steckposition eine mit dem wenigstens einen Schlauchkuppler assoziierte Funktion zuweist. Eine derartige Selbstkonfiguration ist insbesondere bei einem aus einem Traktor sowie einem Anbaugerät bestehenden landwirtschaftlichen Fahrzeuggespann von Vorteil, da jedem der Schlauchkuppler des Anbaugeräts eine bestimmte hydraulisch ausführbare Arbeitsfunktion zugeordnet ist, die mittels hydraulischer Antriebs- und/oder Stelleinrichtungen am Anbaugerät ausgeführt wird.

Das Anschlussfeld kann als elektrisch betätigbarer Steuerventilblock ausgebildet sein, der sich im Heck- oder Frontbereich des Traktors in der Nähe einer zugehörigen mechanischen Anbaugeräteschnittstelle befindet. Üblicherweise ist jedem der Schlauchkuppler ein bestimmter Steckplatz am Steuerventilblock zugewiesen, Verwechslungen führen daher zwangsläufig zu Fehlfunktionen des Anbaugeräts. Die Selbstkonfiguration des Anschlussfeldes und damit des Steuerventilblocks erlaubt es daher, dass der Bediener die Schlauchkuppler ungeachtet ihrer jeweils zugeordneten Arbeitsfunktionen an eine beliebige der Kupplungsdosen anschließen kann.

Gemäß einer zweiten Ausführungsform der erfindungsgemäßen Anordnung kann eine Bedienerrückmeldung zur Verifizierung der korrekten Steckposition des wenigstens einen Schlauchkupplers am Anschlussfeld vorgesehen sein. Dies ist insbesondere dann von Vorteil, wenn eine Selbstkonfiguration des Anschlussfelds aus technischen Gründen nicht möglich ist. In einem solchen Fall überprüft die Auswerteeinheit, ob die übertragenen Identifikationsdaten, mithin die ermittelte Steckposition des wenigstens einen Schlauchkupplers am Anschlussfeld, mit der mit dem wenigstens einen Schlauchkuppler assoziierten Funktion korreliert.

Trifft dies zu, so veranlasst die Auswerteeinheit eine Bedienerrückmeldung in Form der Ausgabe einer entsprechenden Bedienerinformation durch Ansteuerung einer zugehörigen Anzeigeeinheit, im einfachsten Fall einer grünen Leuchtdiode. Liegt hingegen keine Korrelation vor, so wird die Ausgabe der Bedienerinformation entsprechend angepasst, beispielsweise durch Ansteuerung einer von der Anzeigeeinheit umfassten roten Leuchtdiode. Der Bediener erkennt auf diese Weise unmittelbar, ob sich der Schlauchkuppler in seiner korrekten Steckposition befindet oder umgesteckt werden muss. Abweichend davon ist es auch vorstellbar, dass die Bedienerrückmeldung bereits vor Herstellung der endgültigen Kupplungsverbindung erfolgt, indem der Bediener schon bei Annäherung des wenigstens einen Schlauchkupplers an eine der Kupplungsdosen einen optischen Hinweis erhält, ob diese mit der korrekten Steckposition einhergeht. Ein lästiges Umstecken der Schlauchkuppler an dem insbesondere als elektrisch betätigbarer Steuerventilblock ausgebildeten Anschlussfeld lässt sich so vermeiden.

Ungeachtet der vorstehend beschriebenen (optischen) Bedienerrückmeldung kann die erfolgreiche Verifizierung der korrekten Steckposition auch dazu verwendet werden, den Betrieb des Anschlussfelds freizugeben, andernfalls zu sperren, sodass Fehlfunktionen eines daran angeschlossenen Geräts vermieden werden.

Die Übertragung der Identifikationsdaten erfolgt insbesondere drahtlos mittels eines von der Datenschnittstelle umfassten Transponders. Der Transponder kann baulich in den wenigstens einen Schlauchkuppler integriert sein und nach dem Bluetooth-Standard gemäß IEEE 802.15.1 arbeiten. Der von dem Transponder über die Empfangsspule ausgelesene Identifikator wird per Funk in Form der zugehörigen Identifikationsdaten an eine mit der Auswerteeinheit in Verbindung stehende Empfangs- und/oder Sendeeinheit übertragen. Abweichend davon ist jedoch auch eine Verwendung beliebiger anderer drahtloser Übertragungsstrecken denkbar.

Die Empfangs- und/oder Sendeeinheit einschließlich der Auswerteeinheit ist dem Traktor oder aber dem Anbaugerät zugeordnet. In letzterem Fall ist die Auswerteeinheit als sogenannter Jobrechner ausgebildet, der unter anderem Koordinationsaufgaben von mittels des Anbaugeräts ausführbaren Arbeitsfunktionen über ein mit einer Steuereinheit des Traktors in Verbindung stehendes ISOBUS-Netzwerk übernimmt. Um die vom Transponder übertragenen Identifikationsdaten einem bestimmten Schlauchkuppler zuordnen zu können, werden diese ferner um eine entsprechende Transponderkennung ergänzt.

Die Energieversorgung des Transponders kann berührungslos erfolgen, genauer gesagt mittels der Sendespule durch Induktion eines Wechselfeldes in der Empfangsspule. Auf eine eigene Energieversorgung des Transponders, wie etwa eine Batterie oder einen aufladbaren Energiespeicher, kann in diesem Fall verzichtet werden. Andererseits ist es auch vorstellbar, dass ein an der Kupplungsdose vorgesehener und mit einer Stromversorgung verbundener federbelsteter Schleifer beim Anschließen des wenigstens einen Schlauchkupplers einen elektrischen Kontakt zu einem an dem wenigstens einen Schlauchkuppler umlaufenden und mit dem Transponder verbundenen Kontaktring herstellt.

Für den Fall einer drahtlosen Übertragung der Identifikationsdaten kann die Anzeigeeinheit baulich und damit vor Beschädigungen und äußeren Verschmutzungen geschützt in den Transponder integriert sein. Hierbei erhält der Transponder die zur Steuerung der Anzeigeeinheit erforderlichen Signale seitens der Auswerteeinheit, genauer gesagt per Funk über die mit der Auswerteeinheit in Verbindung stehende Empfangs- und/oder Sendeeinheit.

Der Auslesevorgang des Identifikators kann bei Annäherung der Empfangsspule an die Sendespule, insbesondere bei Aufnahme einer damit verbundenen berührungslosen Energieversorgung des Transponders initiiert werden. Zusätzlich kann die Initiierung des Auslesevorgangs bei einem landwirtschaftlichen Fahrzeuggespann von der Erkennung einer zwischen Traktor und Anbaugerät aufgebauten ISOBUS-Datenkommunikationsverbindung abhängig gemacht werden.

Die erfindungsgemäße Anordnung wird im Folgenden anhand der beigefügten Zeichnungen näher erläutert. Dabei sind hinsichtlich ihrer Funktion übereinstimmende bzw. vergleichbare Komponenten mit denselben Bezugszeichen gekennzeichnet. Es zeigen:
- Fig. 1: eine schematisch dargestellte erste Ausführungsform der erfindungsgemäßen Anordnung zur Ermittlung der Steckposition eines Schlauchkupplers an einem Anschlussfeld,
- Fig. 2: eine schematisch dargestellte zweite Ausführungsform der erfindungsgemäßen Anordnung zur Ermittlung der Steckposition eines Schlauchkupplers an einem Anschlussfeld, und
- Fig. 3: eine Schnittdarstellung eines Anschlussfelds mit einer Kupplungsdose sowie einem daran angeschlossenen Schlauchkuppler als Bestandteil der in Fig. 2 wiedergegebenen zweiten Ausführungsform der erfindungsgemäßen Anordnung.

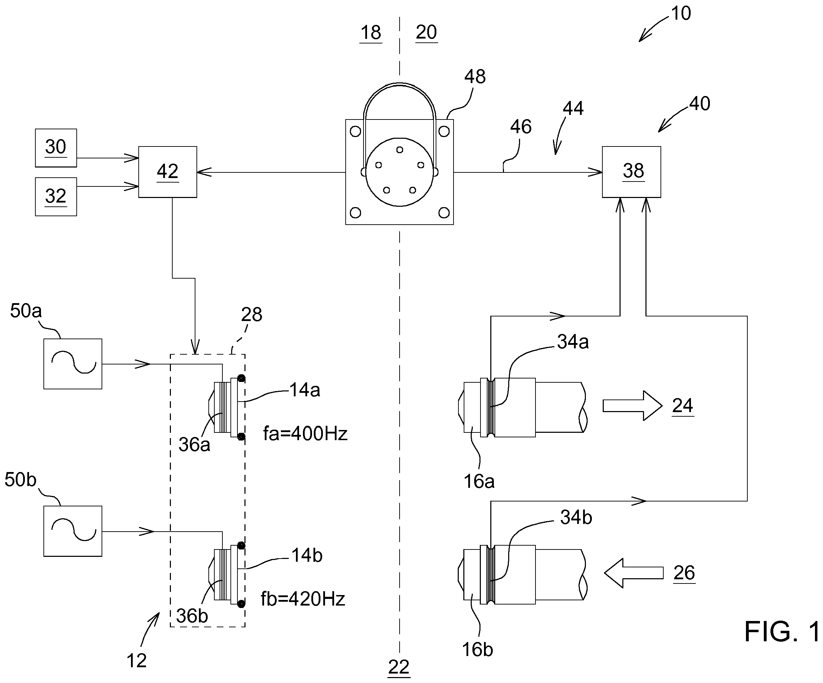

Fig. 1 zeigt eine erste beispielhafte Ausführungsform einer erfindungsgemäßen Anordnung zur Ermittlung der Steckposition eines Schlauchkupplers an einem Anschlussfeld.

Die Anordnung 10 umfasst ein Anschlussfeld 12, das mehrere Kupplungsdosen 14a, 14b zum Anschluss zugehöriger Schlauchkuppler 16a, 16b aufweist. Die Schlauchkuppler 16a, 16b sind ebenfalls Bestandteil der Anordnung 10, wobei es sich bei diesen im vorliegenden Fall um hydraulische Energieversorgungsanschlüsse handelt. Die Kupplungsdosen 14a, 14b sind dementsprechend als Hydraulikbuchsen zur Aufnahme der Schlauchkuppler 16a, 16b ausgebildet. Gemäß einer nicht dargestellten Weiterbildung der Anordnung 10 können zusätzliche Schlauchkuppler in Form von pneumatischen Energieversorgungsanschlüssen vorhanden sein, wobei es sich dann bei den Kupplungsdosen um Pneumatikbuchsen handelt.

Die Anordnung 10 ist Bestandteil eines aus einem Traktor 18 sowie einem Anbaugerät 20 bestehenden landwirtschaftlichen Fahrzeuggespanns 22. Jedem der Schlauchkuppler 16a, 16b des Anbaugeräts 20 ist eine bestimmte hydraulisch ausführbare Arbeitsfunktion 24, 26 zugeordnet, die mittels (nicht dargestellter) hydraulischer Antriebs- und/oder Stelleinrichtungen am Anbaugerät 20 ausgeführt wird.

Das Anschlussfeld 12 ist hierbei als elektrisch betätigbarer Steuerventilblock 28 ausgebildet, der sich im Heck- oder Frontbereich des Traktors 18 in der Nähe einer zugehörigen (nicht dargestellten) mechanischen Anbaugeräteschnittstelle befindet. Bei der mechanischen Anbaugeräteschnittstelle handelt es sich um einen Dreipunkt-Kraftheber, ein Kupplungsmaul, ein Zugpendel oder dergleichen.

Der Steuerventilblock 28 weist den Kupplungsdosen 14a, 14b individuell zugeordnete (nicht dargestellte) Proportionalventile auf, die sich über eine Bedienerschnittstelle 30 in Form einer berührungsempfindlichen Bedien- und Anzeigeeinheit bzw. ein Assistenzsystem 32, beispielsweise eines Headland-Managementsystems oder dergleichen, zur Ausführung der jeweiligen Arbeitsfunktionen 24, 26 des Anbaugeräts 20 voneinander unabhängig ansteuern lassen.

Für die Zwecke der Erläuterung der Funktionsweise der Anordnung 10 sind lediglich zwei Kupplungsdosen 14a, 14b dargestellt, tatsächlich können jedoch auch weitere vorgesehen sein. In gängigen Traktoranwendungen kann es sich um bis zu zwölf Hydraulikbuchsen handeln, die in Paaren angeordnet sind, um einen jeweiligen Zu- und Rücklauf für Hydraulikflüssigkeit zu bilden.

Des Weiteren weist jeder der Schlauchkuppler 16a, 16b eine Empfangsspule 34a, 34b sowie jede der Kupplungsdosen 14a, 14b eine Sendespule 36a, 36b auf. Die Empfangsspulen 34a, 34b bzw. die Sendespulen 36a, 36b sind baulich in den Schlauchkuppler 16a, 16b bzw. die Kupplungsdosen 14a, 14b eingebettet, um diese vor äußeren Beschädigungen zu schützen.

Beim Anschließen des Schlauchkupplers 16a, 16b an eine der Kupplungsdosen 14a, 14b wird ein an der Sendespule 36a, 36b abrufbarer individueller Identifikator mittels der Empfangsspule 34a, 34b ausgelesen und über eine mit der Empfangsspule 34a, 34b kommunizierende Datenschnittstelle 38, die Bestandteil eines Jobrechners 40 ist, in Form zugehöriger Identifikationsdaten an eine traktorseitig vorgesehene Auswerteeinheit 42 zur Ermittlung der Steckposition des Schlauchkupplers 16a, 16b übertragen. Bei den übertragenen Identifikationsdaten kann es sich um den Identifikator selbst oder eine daraus abgeleitete Größe handeln, die den Identifikator in eindeutiger Weise charakterisiert. Jeder der Kupplungsdosen 14a, 14b ist ein individueller Indikator zugewiesen, der sich von denjenigen der übrigen Kupplungsdosen des Anschlussfelds 12 in eindeutiger Weise unterscheidet, sodass eine verlässliche Erkennung der jeweiligen Steckposition des Schlauchkupplers 16a, 16b an dem Anschlussfeld 12 sichergestellt ist.

Vorliegend werden die mittels der Empfangsspulen 34a, 34b ausgelesenen Identifikatoren zur Bereitstellung der Identifikationsdaten von der gemeinsamen Datenschnittstelle 38 bzw. dem Jobrechner 40 aufbereitet und digitalisiert. Die sich daraus ergebenden Identifikationsdaten werden anschließend über einen Datenbus 44, genauer gesagt ein ISOBUS-Netzwerk 46 sowie einen zwischen Traktor 18 und Anbaugerät 20 angeordneten ISOBUS-Steckverbinder 48 (sog. ISOBUS Breakaway Connector) an die Auswerteeinheit 42 übertragen.

Bei dem Identifikator handelt es sich um ein mittels der Sendespule 36a, 36b in der Empfangsspule 34a, 34b induziertes Stromsignal mit einer für die Kupplungsdosen 14a, 14b jeweils spezifischen Frequenz und/oder Amplitude. Beispielsgemäß ist für die obere Kupplungsdose 14a eine Frequenz fₐ von 400 Hz und für die untere Kupplungsdose 14b eine Frequenz f_{b} von 420 Hz bei im Wesentlichen übereinstimmender Amplitude vorgesehen. Jede der Sendespulen 36a, 36b steht mit einem eigenen Signalsynthesizer 50a, 50b zur Erzeugung eines entsprechenden Stromsignals in Verbindung. Abweichend davon können auch sämtliche Sendespulen 36a, 36b mit einem von einem einzelnen Signalsynthesizer erzeugten einheitlichen Frequenzgemisch in Form eines Rauschsignals beaufschlagt werden, wobei die Erzeugung der spulenindividuellen Stromsignale mittels mit den Sendespulen 36a, 36b sowie weiteren Filterelementen gebildeten Resonanzkreisen erfolgt.

Beispielsgemäß weist die Auswerteeinheit 42 jeder der Kupplungsdosen 14a, 14b nach Maßgabe der ermittelten Steckposition eine mit dem Schlauchkuppler 16a, 16b assoziierte Funktion, mithin die dem betreffenden Schlauchkuppler 16a, 16b jeweils zugeordnete Arbeitsfunktion 24, 26 des Anbaugeräts 20 zu. Die solchermaßen durchgeführte Selbstkonfiguration des Anschlussfeldes 12 erlaubt es, dass der Bediener die Schlauchkuppler 16a, 16b ungeachtet ihrer jeweils zugeordneten Arbeitsfunktionen 24, 26 an eine beliebige der Kupplungsdosen 14a, 14b anschließen kann.

Gemäß einer alternativen Ausgestaltung der Anordnung 10 ist eine anbaugeräteseitige Steuerung diverser Traktorfunktionen, einschließlich des dem Traktor 18 zugeordneten Steuerventilblocks 28 vorgesehen. Die hierfür erforderlichen Steuerbefehle werden von dem Jobrechner 40 des Anbaugeräts 20 über das ISOBUS-Netzwerk 46 an eine zugehörige Traktorsteuerung, hier die Auswerteeinheit 42 gesendet. Eine derartige Funktion ist bei Traktoren des Herstellers John Deere unter der Bezeichnung "Tractor Implement Automation" bzw. "TIA" bekannt. Insofern unterbleibt eine Übertragung der Identifikationsdaten, vielmehr werden diese von dem Jobrechner 40 zur anbaugeräteseitigen Ermittlung der Steckpositionen der Schlauchkuppler 16a, 16b herangezogen, um die den Steuerventilblock 28 betreffenden Steuerbefehle derart zu modifizieren, dass eine korrekte Ausführung der zugehörigen hydraulischen Arbeitsfunktionen 24, 26 gewährleistet ist.

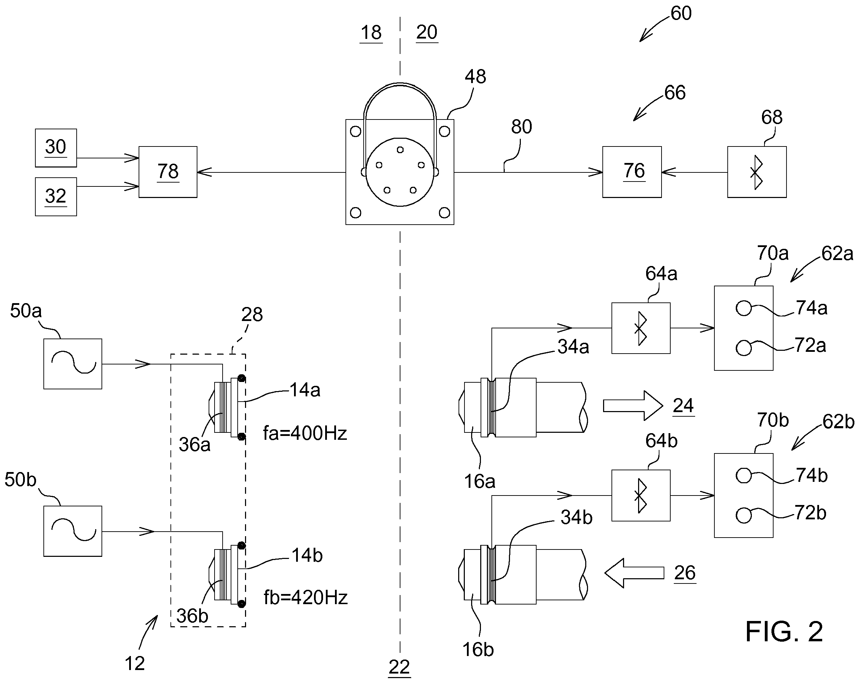

Fig. 2 zeigt eine zweite beispielhafte Ausführungsform einer erfindungsgemäßen Anordnung zur Ermittlung der Steckposition eines Schlauchkupplers an einem Anschlussfeld.

Die Anordnung 60 unterscheidet sich gegenüber ihrer ersten Ausführungsform unter anderem dahingehend, dass anstelle einer Selbstkonfiguration des Anschlussfelds 12 eine Bedienerrückmeldung zur Verifizierung der korrekten Steckposition der Schlauchkuppler 16a, 16b am Anschlussfeld 12 vorgesehen ist. Dies ist insbesondere dann von Vorteil, wenn eine Selbstkonfiguration des Anschlussfelds 12 aus technischen Gründen nicht möglich ist, beispielsweise im Falle der Nachrüstung von (älteren) Traktoren eines vorhandenen Fahrzeugbestands.

Ferner sieht die Anordnung 60 eine drahtlose Übertragung der Identifikationsdaten mittels eines von einer jeweiligen Datenschnittstelle 62a, 62b umfassten Transponders 64a, 64b vor. Der Transponder 64a, 64b ist (entgegen der schematischen Darstellung in Fig. 2) baulich in den betreffenden Schlauchkuppler 16a, 16b integriert und arbeitet nach dem Bluetooth-Standard gemäß IEEE 802.15.1. Der von dem Transponder 64a, 64b über die Empfangsspule 34a, 34b ausgelesene Identifikator wird per Funk in Form zugehöriger Identifikationsdaten an eine mit einer Auswerteeinheit 66 in Verbindung stehende Empfangs- und/oder Leseeinheit 68 übertragen.

Die Auswerteeinheit 66 überprüft, ob die übertragenen Identifikationsdaten, mithin die ermittelten Steckpositionen der Schlauchkuppler 16a, 16b am Anschlussfeld 12, mit der mit dem betreffenden Schlauchkuppler 16a, 16b assoziierten Funktion korrelieren. Trifft dies zu, so veranlasst die Auswerteeinheit 66 eine Bedienerrückmeldung in Form der Ausgabe einer entsprechenden Bedienerinformation durch Ansteuerung einer zugehörigen Anzeigeeinheit 70a, 70b, hier einer grünen Leuchtdiode 72a, 72b. Liegt hingegen keine Korrelation vor, so wird die Ausgabe der Bedienerinformation entsprechend angepasst, was durch Ansteuerung einer von der Anzeigeeinheit 70a, 70b umfassten roten Leuchtdiode 74a, 74b geschieht. Der Bediener erkennt auf diese Weise unmittelbar, ob sich der Schlauchkuppler 16a, 16b in seiner korrekten Steckposition befindet oder umgesteckt werden muss. Abweichend davon ist es auch vorstellbar, dass die Bedienerrückmeldung bereits vor Herstellung der endgültigen Kupplungsverbindung erfolgt, indem der Bediener schon bei Annäherung des Schlauchkupplers 16a, 16b an eine der Kupplungsdosen 14a, 14b einen optischen Hinweis erhält, ob diese mit der korrekten Steckposition einhergeht. Ein lästiges Umstecken der Schlauchkuppler 16a, 16b lässt sich so vermeiden.

Die Anzeigeeinheit 70a, 70b ist gemeinsam mit dem Transponder 64a, 64b baulich und damit vor Beschädigungen und äußeren Verschmutzungen geschützt in die Datenschnittstelle 62a, 62b integriert. Der Transponder 64a, 64b erhält die zur Steuerung der Anzeigeeinheit 70a, 70b erforderlichen Signale seitens der Auswerteeinheit 66, genauer gesagt per Funk über die mit der Auswerteeinheit 66 in Verbindung stehende Empfangs- und/oder Sendeeinheit 68.

Ungeachtet der vorstehend beschriebenen optischen Bedienerrückmeldung kann die erfolgreiche Verifizierung der korrekten Steckposition auch dazu verwendet werden, den Betrieb des Anschlussfeldes 12 freizugeben, andernfalls zu sperren, sodass Fehlfunktionen eines daran angeschlossenen Anbaugeräts 20 vermieden werden.

Die Auswerteeinheit 66 ist dem Anbaugerät 20 als sogenannter Jobrechner 76 zugeordnet. Der Jobrechner 76 übernimmt unter anderem Koordinationsaufgaben von mittels des Anbaugeräts 20 ausführbaren Arbeitsfunktionen über ein mit einer Steuereinheit 78 des Traktors 18 in Verbindung stehendes ISOBUS-Netzwerk 80. Um die von dem Transponder 64a, 64b übertragenen Identifikationsdaten zuordnen zu können, werden diese ferner um eine entsprechende Transponderkennung ergänzt.

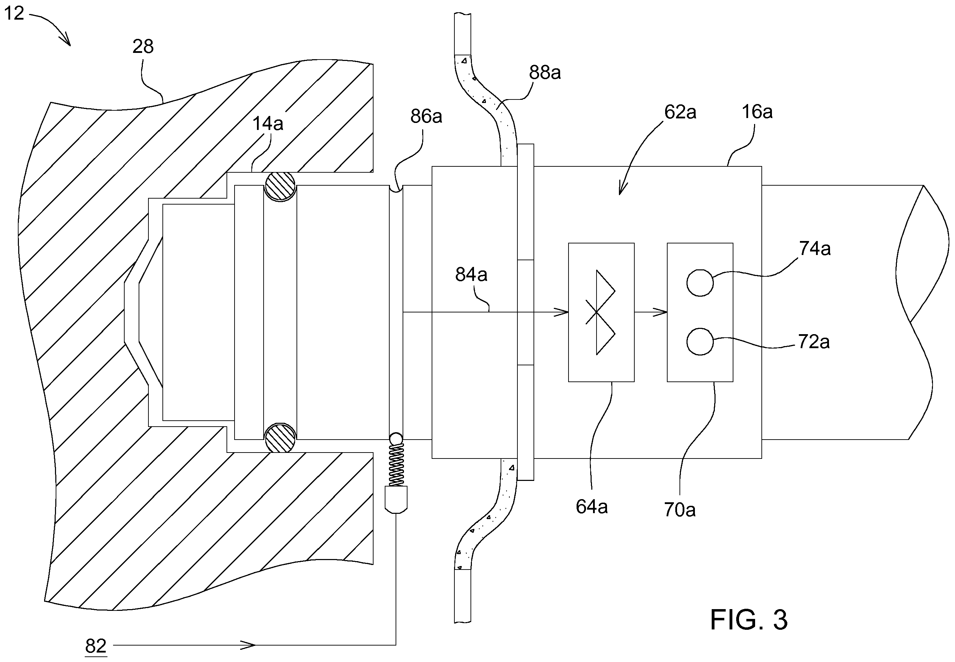

Die Energieversorgung des Transponders 64a, 64b erfolgt berührungslos mittels der Sendespule 36a, 36b durch Induktion eines Wechselfeldes in der Empfangsspule 34a, 34b. Diese Art der Energieversorgung stellt jedoch lediglich eine von mehreren Möglichkeiten dar. So kann gemäß einer in Fig. 3 skizzierten alternativen Weiterbildung der Anordnung 60 auch ein an der oberen Kupplungsdose 14a des Anschlussfelds 12 vorgesehener und mit einer Stromversorgung 82 verbundener federbelasteter Schleifer 84a beim Anschließen des Schlauchkupplers 16a einen elektrischen Kontakt zu einem an dem Schlauchkuppler 16a umlaufenden und mit dem Transponder 64a verbundenen Kontaktring 86a herstellen. Ein Staubschutzring 88a verhindert ein Eindringen von Feuchtigkeit und äußeren Verschmutzungen. Die Empfangs- und Sendespulen 36a, 36a sind hierbei aus Gründen der Übersichtlichkeit weggelassen. Für die untere Kupplungsdose 14b gelten die vorstehenden Betrachtungen entsprechend.

Der Auslesevorgang des Identifikators wird von der Auswerteeinheit 66 und/oder dem Transponder 64a, 64b bei Annäherung der Empfangsspule 34a, 34b an die Sendespule 36a, 36b, genauer gesagt bei Aufnahme einer damit verbundenen berührungslosen Energieversorgung des Transponders 64a, 64b initiiert. Optional wird die Initiierung des Auslesevorgangs von der Erkennung einer zwischen Traktor 18 und Anbaugerät 20 über das ISOBUS-Netzwerk 80 aufgebauten ISOBUS-Datenkommunikationsverbindung abhängig gemacht.

Beispielsgemäß sind Auswerteeinheit 66 sowie Empfangs- und/oder Leseeinheit 68 dem Anbaugerät 20 zugeordnet. Gemäß einer alternativen Ausbildung der Anordnung 60 ist die Auswerteeinheit 66 einschließlich der Empfangs- und/oder Leseeinheit 68 Bestandteil des Traktors 18 bzw. einer von diesem umfassten Steuergerätearchitektur, wobei diese innerhalb der Steuergerätearchitektur über einen CAN-Datenbus mit der Steuereinheit 78 verknüpft sind.

## Patentansprüche

1. Landwirtschaftliches Fahrzeuggespann, bestehend aus einem Traktor (18) und einem Anbaugerät (20), mit einer Anordnung (10; 60) zur Ermittlung der Steckposition eines Schlauchkupplers an einem Anschlussfeld, umfassend ein traktorseitig vorgesehenes Anschlussfeld (12) mit einer Vielzahl von Kupplungsdosen (14a, 14b) zum Anschluss zugehöriger Schlauchkuppler (16a, 16b), wenigstens einen daran anschließbaren anbaugeräteseitig vorgesehenen Schlauchkuppler (16a, 16b), eine Datenschnittstelle (38; 62a, 62b) sowie eine traktor- oder anbaugeräteseitig vorgesehene Auswerteeinheit (42; 66), **dadurch gekennzeichnet, dass** der wenigstens eine Schlauchkuppler (16a, 16b) eine Empfangsspule (34a, 34b) sowie jede der Kupplungsdosen (14a, 14b) eine Sendespule (36a, 36b) aufweist, wobei beim Anschließen des wenigstens einen Schlauchkupplers (16a, 16b) an eine der Kupplungsdosen (14a, 14b) ein an der Sendespule (36a, 36b) abrufbarer individueller Identifikator mittels der Empfangsspule (34a, 34b) ausgelesen und über die mit der Empfangsspule (34a, 34b) kommunizierende anbaugeräteseitig vorgesehene Datenschnittstelle (38; 62a, 62b) an die traktor- oder anbaugeräteseitig vorgesehene Auswerteeinheit (42; 66) zur Ermittlung der Steckposition des wenigstens einen Schlauchkupplers (16a, 16b) übertragen wird.

2. Fahrzeuggespann nach Anspruch 1, **dadurch gekennzeichnet, dass** es sich bei dem Identifikator um ein mittels der Sendespule (36a, 36b) in der Empfangsspule (34a, 34b) induziertes Stromsignal mit einer für die Kupplungsdosen (14a, 14b) jeweils spezifischen Frequenz und/oder Amplitude handelt.

3. Fahrzeuggespann nach wenigstens einem der vorhergehenden Ansprüche, **dadurch gekennzeichnet, dass** die Auswerteeinheit (42) der Kupplungsdose (14a, 14b) nach Maßgabe der ermittelten Steckposition eine mit dem wenigstens einen Schlauchkuppler (16a, 16b) assoziierte Funktion zuweist.

4. Fahrzeuggespann nach wenigstens einem der vorhergehenden Ansprüche, **dadurch gekennzeichnet, dass** das Anschlussfeld (12) als elektrisch betätigbarer Steuerventilblock (28) ausgebildet ist.

5. Fahrzeuggespann nach wenigstens einem der vorhergehenden Ansprüche, **dadurch gekennzeichnet, dass** eine Bedienerrückmeldung zur Verifizierung der korrekten Steckposition des wenigstens einen Schlauchkupplers (16a, 16b) am Anschlussfeld (12) vorgesehen ist.

6. Fahrzeuggespann nach wenigstens einem der vorhergehenden Ansprüche, **dadurch gekennzeichnet, dass** die Übertragung der Identifikationsdaten drahtlos mittels eines von der Datenschnittstelle (62a, 62b) umfassten Transponders (64a, 64b) erfolgt.

7. Fahrzeuggespann nach Anspruch 6, **dadurch gekennzeichnet, dass** die Energieversorgung des Transponders (64a, 64b) berührungslos erfolgt.

8. Fahrzeuggespann nach wenigstens einem der vorhergehenden Ansprüche, **dadurch gekennzeichnet, dass** der Auslesevorgang des Identifikators bei Annäherung der Empfangsspule (34a, 34b) an die Sendespule (36a, 36b) initiiert wird.

## Claims

1. Agricultural vehicle combination, consisting of a tractor (18) and an attachment (20), comprising an arrangement (10; 60) for ascertaining the insertion position of a hose coupler on a connection area, comprising a connection area (12) which is provided on the tractor side and has a large number of coupling sockets (14a, 14b) for connecting associated hose couplers (16a, 16b), at least one hose coupler (16a, 16b) which can be connected to the said coupling sockets and are provided on the attachment side, a data interface (38; 62a, 62b) and also an evaluation unit (42; 66) which is provided on the tractor or attachment side, **characterized in that** the at least one hose coupler (16a, 16b) has a receiving coil (34a, 34b) and each of the coupling sockets (14a, 14b) has a transmitting coil (36a, 36b), wherein, when the at least one hose coupler (16a, 16b) is connected to one of the coupling sockets (14a, 14b), an individual identifier which can be called up at the transmitting coil (36a, 36b) is read out by means of the receiving coil (34a, 34b) and is transmitted via the data interface (38; 62a, 62b), which communicates with the receiving coil (34a, 34b) and is provided on the attachment side, to the evaluation unit (42; 66), which is provided on the tractor or attachment side, for ascertaining the insertion position of the at least one hose coupler (16a, 16b).

2. Vehicle combination according to Claim 1, **characterized in that** the identifier is a current signal which is induced in the receiving coil (34a, 34b) by means of the transmitting coil (36a, 36b) and has a frequency and/or amplitude which is respectively specific to the coupling sockets (14a, 14b).

3. Vehicle combination according to at least one of the preceding claims, **characterized in that** the evaluation unit (42) allocates a function, which is associated with the at least one hose coupler (16a, 16b), to the coupling socket (14a, 14b) depending on the ascertained insertion position.

4. Vehicle combination according to at least one of the preceding claims, **characterized in that** the connection area (12) is designed as an electrically operable control valve block (28).

5. Vehicle combination according to at least one of the preceding claims, **characterized in that** operator feedback is provided for verifying the correct insertion position of the at least one hose coupler (16a, 16b) on the connection area (12).

6. Vehicle combination according to at least one of the preceding claims, **characterized in that** the transmission of the identification data is performed wirelessly by means of a transponder (64a, 64b) which is comprised by the data interface (62a, 62b).

7. Vehicle combination according to Claim 6, **characterized in that** the energy supply to the transponder (64a, 64b) takes place in a contactless manner.

8. Vehicle combination according to at least one of the preceding claims, **characterized in that** the read-out process of the identifier is initiated as the receiving coil (34a, 34b) approaches the transmitting coil (36a, 36b) .

## Revendications

1. Ensemble de véhicules agricoles, composé d'un tracteur (18) et d'un attelage (20), comprenant un agencement (10 ; 60) destiné à déterminer la position d'enfichage d'un coupleur tubulaire sur un panneau de connexion, comprenant un panneau de connexion (12) prévu côté tracteur et pourvu d'une pluralité de prises d'accouplement (14a, 14b) pour la connexion de coupleurs tubulaires (16a, 16b) associés, au moins un coupleur tubulaire (16a, 16b) prévu côté attelage et pouvant être connecté à celui-ci, une interface de données (38 ; 62a, 62b) et une unité d'évaluation (42 ; 66) prévue côté tracteur ou côté attelage, **caractérisé en ce que** ledit au moins un coupleur tubulaire (16a, 16b) comporte une bobine de réception (34a, 34b) et chacune desdites prises d'accouplement (14a, 14b) comporte une bobine d'émission (36a, 36b), dans lequel, lors de la connexion dudit au moins un coupleur tubulaire (16a, 16b) à l'une des prises d'accouplement (14a, 14b), un identificateur individuel pouvant être demandé à la bobine d'émission (36a, 36b) est lu au moyen de la bobine de réception (34a, 34b) et est transmis par l'intermédiaire de l'interface de données (38 ; 62a, 62b) prévue côté attelage et communiquant avec la bobine de réception (34a, 34b) à l'unité d'évaluation (42 ; 66) prévue côté tracteur ou côté attelage pour déterminer la position d'enfichage dudit au moins un coupleur tubulaire (16a, 16b).

2. Ensemble de véhicules selon la revendication 1, **caractérisé en ce que** l'identificateur est un signal de courant induit dans la bobine de réception (34a, 34b) au moyen de la bobine d'émission (36a, 36b) et ayant une fréquence et/ou une amplitude qui est respectivement spécifique des prises d'accouplement (14a, 14b).

3. Ensemble de véhicules selon au moins l'une des revendications précédentes, **caractérisé en ce que** l'unité d'évaluation (42) attribue à la prise d'accouplement (14a, 14b) une fonction associée audit au moins un coupleur tubulaire (16a, 16b) en fonction de la position d'enfichage déterminée.

4. Ensemble de véhicules selon au moins l'une des revendications précédentes, **caractérisé en ce que** le panneau de connexion (12) est réalisé sous la forme d'un bloc de soupapes de commande (28) actionnable électriquement.

5. Ensemble de véhicules selon au moins l'une des revendications précédentes, **caractérisé en ce qu'**un retour d'information de l'opérateur est prévu sur le panneau de connexion (12) pour vérifier la position d'enfichage correcte dudit au moins un coupleur tubulaire (16a, 16b).

6. Ensemble de véhicules selon au moins l'une des revendications précédentes, **caractérisé en ce que** la transmission des données d'identification s'effectue sans fil au moyen d'un transpondeur (64a, 64b) faisant partie de l'interface de données (62a, 62b).

7. Ensemble de véhicules selon la revendication 6, **caractérisé en ce que** l'alimentation en énergie du transpondeur (64a, 64b) s'effectue sans contact.

8. Ensemble de véhicules selon au moins l'une des revendications précédentes, **caractérisé en ce que** le processus de lecture de l'identificateur est déclenché lorsque la bobine de réception (34a, 34b) se rapproche de la bobine d'émission (36a, 36b).
